# EUROPEAN PATENT APPLICATION

(11) **EP 2 157 464 A1**
(43) Date of publication of application: **24.02.2010**
(21) Application number: 08252386.1
(22) Date of filing: 11.07.2008
(51) Int. Cl.: G02B 6/44

(54) **Cable installation detection apparatus**

(71) Applicant: BRITISH TELECOMMUNICATIONS public limited company, London EC1A 7AJ (GB)
(72) Inventor: The designation of the inventor has not yet been filed
(74) Representative: Williamson, Simeon Paul

(57) **Abstract**

A method for use in connection with installing an optical fibre into a conduit having a first end and a second end,
the method being suitable to detect when the optical fibre introduced into the first end arrives at the second end, and comprising the steps of:
- introducing the optical fibre into the conduit from the first end and installing it towards the second end;
- introducing light with a light source into the optical fibre at the first end;
- detecting reflected light caused by reflection of the light by a surface of the optical fibre, with a light detector at the first end; and
- detecting an increase in the reflected light, whereby an operator may determine that the optical fibre has arrived at the second end.

## Description

The present invention relates to the installation of cables, such as optical fibre units, wires, electrical cables or the like through pre-laid conduits using the blown fibre method. More specifically, the invention relates to apparatus and methods to identify the end of certain stages within the installation process.

An optical fibre unit, which could comprise a single optical fibre, or a bound bundle of typically 2 to 24 optical fibres, can be installed using what is known as the "blown fibre" method, described in EP 108590. In this method, a fibre unit is propagated along a hollow tube pre-laid along the desired route, where compressed air is fed, or "blown" into the mouth of the tube. The viscosity of the flow of air travelling along inside the tube, together with the friction on the outer surface of the fibre unit, helps to carry the fibre unit along the length of the tube.

The tubes or conduits typically are made of plastic, each with a typical inner diameter of 2.5 to 6 mm or more, and are usually provided in a bound bundle comprising up to 24 or more tubes, which are held together within a protective outer sheath. The tubes usually comprise a continuous span between convenient access points such as surface boxes, inspection chambers down man holes, or near telephone poles. Each fibre conduit tube can receive at least one fibre unit comprising one or more individual optical fibres. Large numbers of tube conduits - and bundles of conduits - are pre-installed across the access network and the distribution network between the local exchanges and the customer premises, typically to locations which may require a future fibre connection.

When it is decided to populate these pre-installed tubes, the fibre cable or unit is installed in each tubular span by blowing it down the conduit from one end; alternatively the unit could be blown down a concatenation of spans in a single step if circumstances permit. This is repeated for each span, or concatenation of spans, until a continuous fibre path has been laid between the end points of the whole route. A tubular path can be described between two access points, which may be more than a kilometre apart, by a tubular path comprising a single conduit tube, or a number of tube tubes joined in series. Either way, it is crucial to choose the correct conduit path during installation at the head end location, so that the fibre unit emerges at the desired destination end. During installation however, the operator at one of the installation points would be presented with a large and potentially confusing number of conduit tube openings, each representing a path leading to a destination. The tube openings are usually mapped to their destinations e.g. by colour-coding. If however the tube openings are wrongly mapped, or for other reasons the wrong conduit opening is selected, the pressurised air and fibre unit will fail to reach the desired destination. This is especially so if the working conditions are poor e.g. in adverse weather up a telephone pole or down a manhole or in poor lighting.

Where the path comprises a number of tube lengths connectorised together, yet another problem may lie in broken connections between lengths of conduit tubes within the network, so that the fibre unit may get lost within the system during installation and never emerge at the destination. Yet another issue may be the possibility that the fibre unit, during installation, could be impeded by an imperfect connection or a tight bend or some other source of friction or constriction in the conduit, and again never emerge at the destination.

For any of these or other reasons, the fibre unit may, during installation, emerge in the wrong place, or in an extreme case, not at all. Add to that some uncertainty about the exact length of the conduit route down which the fibre unit is being installed, so that the operator may not even know in a timely manner when something has gone wrong.

The current response to this problem is to use two operators during installation, one at each end of the installation conduit path. The second operator at the destination end of the tubular path is required because the destination or remote end is often some distance away - up to a kilometre or more - from the head end. The operator at the head end is therefore unable to know the status of the remote end during an installation without a second operator located there reporting the status back to the head end.

During a typical installation session, the first operator situated at the head end of the conduit fits a protective slug or "bead" on the tip of the fibre unit, then feeds this and compressed air into the mouth of the conduit with fibre installation apparatus - known in the art as a "blowing head" which is described in general in WO88/00713. Meanwhile the second operator locates himself at the desired end point of the fibre installation. The process commences by directing compressed air into the mouth of the head end conduit. If the air is directed into the correct conduit so that the tubular path leads to the desired destination, the remote end operator can eventually sense the "arrival" of the air at the far end of the installation (i.e. the end opposite to the installation equipment) with an airflow meter temporarily connected to the end of the conduit, or more simply by feeling the airflow exiting the conduit against his hand if the airflow is sufficiently high. He then communicates this to the head end operator by radio or other means, to confirm to the head end operator that the air is applied to the correct conduit. The head end operator upon receiving the news, then blows the fibre unit into the conduit through to the remote end, whereupon the remote end operator advises his colleague on its arrival. The head end operator then turns off the air supply and the blowing head, and the installation process is complete.

This process is labour-intensive as a minimum of two operators must work on a single installation. This is in turn drives up the overall cost of optical fibre installation, a problem now especially significant in the FTTP context with the considerable installation volumes involved.

Various methods requiring only a single operator installation of blown fibre have been developed, to obtain a significant saving in manpower and cost requirements. In the simplest method, the length of the conduit route is known, allowing the operator to know that the fibre has (probably) arrived at the remote end when the required length of fibre unit has been played out. This relies on the map record of conduit route being up to date and accurate, and presumes a completely smooth and obstruction-free conduit route. Neither of these can be guaranteed in practice.

Another known practice is to install at the remote end of the conduit a barrier of porous material such as an "airstone" which is constructed of a porous material which allows air through but which will stop further progress of the fibre unit. The airstone is temporarily placed at the mouth of the destination remote end of the tube conduit. When the fibre ceases to travel down the tube, this is an indication that the far end of the fibre may have reached the destination end and has been retained by the airstone barrier. However, lack of further progress is ambiguous as to whether the fibre unit has indeed reached the porous airstone at the destination end, or if instead the fibre unit is caught on an obstruction at some intermediate point along the length of the conduit.

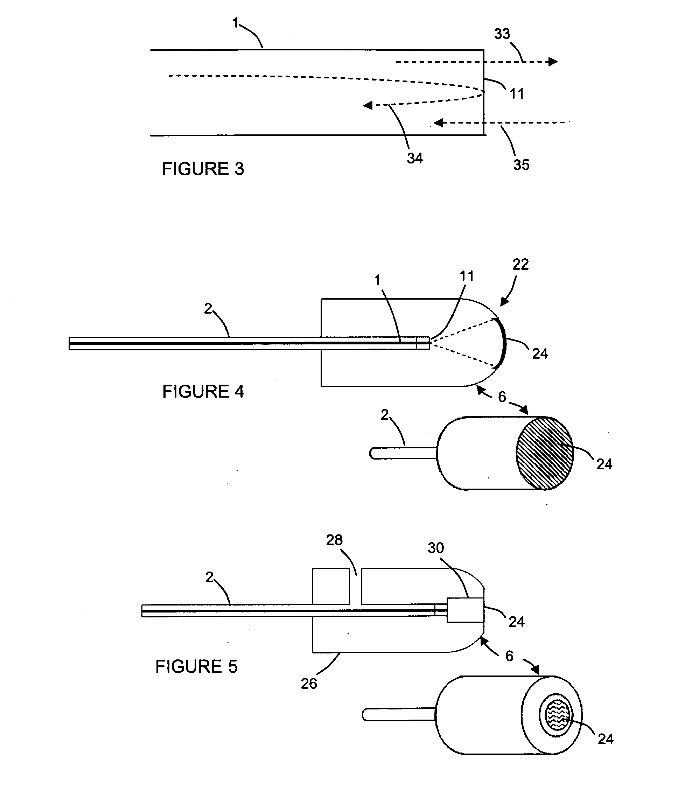

Various methods for detecting air and fibre arrival at the far end have been developed. One method, developed by the applicants of the present case and described in W02007/104910, involves the introduction of light into the fibre at the installation head end. The light propagates through the glass and eventually reaches the far end of the fibre, which is prepared with a cleaved face or surface. Figure 3 depicts such a cleaved end (11) of a fibre (1). The path taken by light beams or rays are shown in dotted lines. Ambient light from outside the fibre unit (35) may pass into the fibre via the cleaved end as shown. Light from within the fibre (33) passes through the cleaved end out of the fibre in the opposite direction. Such light within the fibre may also be reflected (34) off the inner surface of the cleaved glass end, which acts as an internal mirror. This occurs especially when exposed to air or such other medium which has a refractive index similar to air, and is due to the differential in the refractive index of the glass material in the fibre core (within which the propagating light is contained) compared with the refractive index of air which surround the cleaved end. The refractive index of air is 1 whereas that of glass is typically 1.5. Although the ratio of these indices is fairly close numerically, that difference has a significant effect on the propagation of light.

In use, light may transmit in all the above ways simultaneously off the surface of, and through, the cleaved end. Thus, part of the light propagating along the fibre unit from the head end (33) is transmitted onwards beyond the cleaved tip, while a substantially larger portion of the light will be reflected (34).

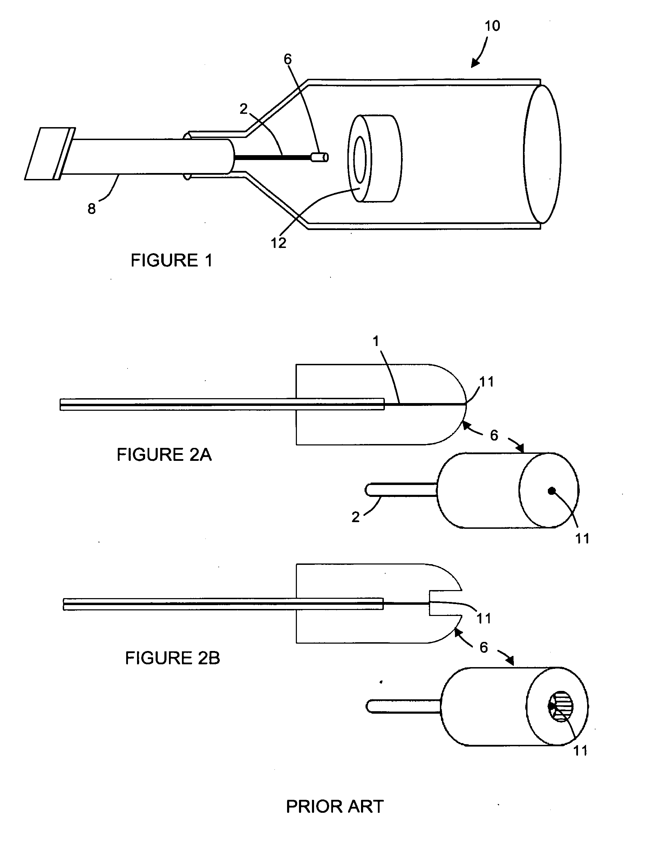

In W02007/104910 and as illustrated in Figure 1, a device (10) is fitted on the far end of the tube (8), which includes a reservoir of index-matching gel (12), which has a refractive index almost identical to the optical fibre glass. When the leading end or tip of the fibre unit (2) arrives at the far end of the tube, it becomes immersed or embedded into the gel. The abrupt change in the refractive index at the end of the fibre effectively disappears, so that the fibre core seemingly does not end at the tip. As the inner surface of the cleaved end effectively disappears, it ceases to function as a mirror, and the light within the fibre propagates into the gel. Unlike the fibre core, which is a rigid medium through which the light signal propagates, the gel is does not guide the light. Hence the light propagates in all directions towards the outer boundary of the gel. Any light which is eventually reflected back from the edge of e.g. the gel reservoir, is at best poorly coupled back into the core of the fibre, so effectively all or most of the light is dispersed upon entry into the gel. Detection of a fall in the level or intensity of reflected light is thus an indication to the operator at the head end that the fibre has reached the far end.

The W02007/104910 disclosure also describes the fibre slug or bead (6) used in this method. In a conventional blown fibre installation, the bead fixed onto the leading end of the fibre unit serves primarily to protect the fibre tip as it travels through the conduit or tube. The fibre unit tip is thus completely covered and unexposed. Such beads are typically crimped onto the fibre unit end with pliers, and are bullet-shaped in comprising a rounded front or terminal end to ease its progress through the tube. In the method of W02007/104910, the bead is modified to enable the optical fibre tip to be immersed in the gel reservoir. Either the cleaved face (11) of the fibre is permitted to extend through to the end of the bead (6) as shown in the views of Figure 2A, or else an opening may be included in the rounded front end of the bead which exposes the tip (11) to the gel, as shown in the views of Figure 2B.

The method described in W02007/104910 relies on the creation of a reduction in the reflected light level for transmission back from the far end. For this, it is important to ensure that the fibre tip is sufficiently transparent to allow the normally-reflected light to be transmitted out of the fibre tip and dispersed. Conditions in the field seldom allow for a clean installation however: there is often dirt even within the tube carried in from the environment. Due to the nature of a blown fibre installation, high levels of static electricity and condensation are also generated within the tube. As a result, dust and grime will accumulate within the opening of the above-described bead resulting in a layer forming over the exposed leading face of the fibre as it progresses through the tube. By the time the fibre reaches the far end, the tip may be covered in a layer which compromises its sensing capacity, so that a light level or intensity change may fail to sufficiently register with the light detector at the head end. This is exacerbated by the optical fibre core being typically only 8 micrometres across in diameter, so that the leading face of the fibre has hardly any tolerance of any dirt or dust if it is to detect light level changes. Such lack of robustness and resilience will severely impede wide-scale adoption of this method.

A similar approach is taken in another far end arrival detection technique which is described in WO91/03756. This also uses a method of detecting light reflected back to the head end to determine when the fibre has arrived at the far end. This bead in this case comprises a lens and is made of a plastics material having optical properties which allow for the end face of the fibre to receive light gathered by the rounded lens section of the bead. This bead also includes a bore which exposes the end face of the fibre to air during installation, and so serves as a reservoir for dust and grime to accumulate within when travelling along the blown fibre conduit. Furthermore, the lens bead may also give rise to or result in false positive readings during use. This is because any light level change fed back into the fibre is relatively scattered, especially in the situation where the end or terminal face of the bead (as well as the cleaved end of the fibre itself) is coated with dirt.

The methods of the above documents involve the plunging of the fibre tip in a reservoir of gel or fluid. As may be expected, this might be problematic due to the reservoir with its contents being placed on its side. It would be desirable to have an alternative sensing method for determining that the fibre unit has reached its destination at the remote end of the tube.

According to a first aspect of the present invention there is provided a method for use in connection with installing an optical fibre into a conduit having a first end and a second end,
the method being suitable to detect when the optical fibre introduced into the first end arrives at the second end, and comprising the steps of:
- introducing the optical fibre into the conduit from the first end and installing it towards the second end;
- introducing light with a light source into the optical fibre at the first end;
- detecting reflected light caused by reflection of the light by a surface of the optical fibre, with a light detector at the first end; and
- detecting an increase in the reflected light, whereby an operator may determine that the optical fibre has arrived at the second end.

By using this method, the operator can determine if and when the fibre unit has arrived at the remote end of the conduit when an increase in the amount of reflected light in the fibre unit is detected, which indicates fibre arrival at the remote end. The operator can perform the steps of shining light down the fibre unit and monitoring it for reflected light when he believes that it has arrived at the remote end; alternatively this can be done while the fibre unit is travelling through the conduit tube.

According to a second aspect of the present invention there is provided a device for use in connection with installing an optical fibre into a conduit having a first end and a second end, configured to couple with the conduit at the second end and being suitable to detect when the optical fibre introduced into the first end arrives at the second end, comprising reflecting means for reflecting a light emanating from the optical fibre into the device, so as to permit light detection means located at the first end to detect a change in reflected light levels in the optical fibre.

By using this device, preferably located at the remote end of the conduit tube, the operator can learn when the fibre unit has reached the remote end. Until the fibre unit reaches the device, light introduced in it at the head end travels down the fibre towards the remote end, and is reflected back from the fibre end. When the fibre end reaches device at the remote end, the light within the fibre which escapes via the fibre tip is reflected back from the reflective surface or mirror, at which point the light in the fibre monitored at the head end increases to indicate to the operator at the head end that the fibre unit has arrived at the remote end.

In preferred embodiments, the device is arranged to for use together with apparatus located at the head end of the conduit tube which allows the operator to monitor the fibre unit for the amount of reflected light present, as well as for changes in the level of such reflected light. In a preferred embodiment, the apparatus can be made integral with the source of light.

According to a third aspect of the present invention there is provided a component for use for use in connection with installing an optical fibre into a conduit having a first end and a second end, and for use in conjunction with a device as claimed, the component comprising means for coupling to a tip of the optical fibre and comprising
- a lens configured to permit passage of an emanating light emanating from the tip of the optical fibre to a surface of the lens,
- projection means to project a magnified version of the emanating light onto the surface, the surface being configured to permit at least part of the emanating light to be reflected as reflected light, and to permit passage of a part of the emanating light out of the lens, and
- converging means to positively focus the reflected light into the tip of the optical fibre.

By installing this component in the form of a slug or bead on the fibre unit for installation along the conduit tube, the fibre end or tip can be protected in a way which simultaneously magnifies the relatively small light "sensing" cross sectional area of the fibre tip, for effective interaction with the reflective surface of the device at the remote end.
Preferred embodiments of the invention will now be described, by way of example only, with reference to the accompanying drawings, in which:
Figure 1 is a schematic view of a prior art device including a reservoir of index-matching gel, used at the far end of a tube for installation of blown fibre;
Figures 2A and 2B respectively depict side and orthographic views of beads used in the prior art;
Figure 3 depict the light sensing surface of the invention and illustrates the transmission and reflection of light in connection therewith;
Figure 4 depicts side and orthographic views of a bead according to the invention;
Figure 5 depicts side and orthographic views of an embodiment of the bead;
Figure 6 is an enlarged view of the lens portion of the bead of the invention, and illustrates the transmission of light therein;
Figure 7 illustrates the transmission of light in an alternative embodiment of the invention; and
Figures 8A to 8E depict various embodiments of beads according to the invention;
Figure 9 is a schematic view of a device for use at the far end of the tube to detect fibre arrival of the invention.

### Fibre arrival detection - fibre bead

Figure 4 depicts a bead (20) according to the invention, which is attached to a fibre unit or cable (2) having at least one individual optical fibre (1). The bead includes an integral optical lens arrangement (22). The bead, together with the lens arrangement, fully cover the delicate tip of the glass fibre and so protects, and keeps dirt off, the tip. These functions are missing from the prior art beads of e.g. Figures 2A and 2B.

In use, a section of the outer sheathing of the fibre unit (2) is removed to expose the tip of the individual optical fibre (1), so that its end face (11) may be directly butt-coupled to the lens arrangement (22). The fibre unit may be held in place by applying a suitable contact adhesive such as cyanoacrylate between the outer surface of the fibre unit and the bead. This arrangement allows for light within the fibre to be beamed from the fibre into and through the lens arrangement, and for light surrounding the lens arrangement to be transmitted back into the fibre in the opposite direction.

As noted above, the surface area of the cleaved end of the fibre is very small. Any dirt cover or other obstruction to the area (24) for sensing the reflections and onward transmissions of light shown in Figure 3 renders the bead susceptible to providing a false reading. The cleaved end may not be capable of providing reliable results for use in the field.

In the invention, use of the lens arrangement (22) addresses this problem. The lens causes the light received from the head end (34, 35) to spread or diverge within the body or fabric of the lens itself. The beam from the fibre core is thus magnified and then projected onto the inner side (of the bead and/or lens) of the lens surface (24) as shown by the dotted lines in Figure 4. As shown, this light on inner surface covers an area larger than the cross sectional area of the cleaved end (11). Equally, ambient light desired to be transmitted (35) into the fibre (1) to be received at the head end, which falls on the external side (of the bead and/or lens) of the surface (24), has an enlarged surface area upon which to fall, compared to that of the cleaved end. The lens arrangement is configured to converge or focus such sensed ambient light into the fibre, in the opposite direction to the exiting light (33) as shown by the dotted lines in Figure 4. By increasing the sensing surface area, the bead is considerably more robust and reliable in use when detecting that e.g. the light at the fibre tip has been dispersed through an index-matching gel, even where some dirt has accumulated on the leading face of the bead.

The diverging and focussing effect obtained by using the lens arrangement (22) magnifies or enlarges the effective light-sensing diameter of the core or reflective end face of the optical fibre. The diverging effect is a natural phenomenon and is caused primarily by the propagating light beam emerging from a very small confined area (11) into a much larger environment (the lens). The geometry of the lens arrangement is designed to capture all or most of the diverging beam, reflect it internally, and simultaneously focus it back on to the fibre.

In use, the light originating from the head is projected onto the inner surface of the terminal end of the lens, from which a part of such light is reflected back into the fibre, and a part of which is transmited beyond the lens surface. In other words, the lens surface serves the same function as the cleaved end (11) - so that light transmits through as well as reflects off the surface as described above against Figure 3 - but on an enlarged or magnified scale on the surface of the terminal end (24).

During use therefore, the light ray transmitted from the head end is partly or predominantly reflected (34) at the terminal end (24) of the lens while the lens is exposed to air, while a smaller proportion is transmitted onwards (33). When the fibre unit impacts with the index-matching gel, that balance substantially reverses, so that most of the light within the fibre now escapes, leaving little or none for reflection.

In a preferred embodiment, the lens arrangement (22) in the bead is directly coupled to the cleaved end (11) of the fibre, so that there is no air region between the two components. This ensures that the only glass/air interface in the bead assembly is located at the leading face of the lens. In alternative embodiments, the lens may be indirectly coupled to the cleaved end via an intervening medium having a suitable refractive index allowing for light to be transmitted to and from the two components in an accurate or otherwise predictable manner, such as another glass or plastic block, or a gel or fluid or the like suited to the purpose.

Figure 5 shows a preferred implementation of the invention. The main body (26) of the bead can be made from the same material as is used for conventional beads, such as brass (which resists rusting), or injection-moulded plastic. In the embodiment shown in Figure 5, the bead (6) is arranged to be attached to the fibre unit (2) with adhesive which is applied via access hole (28). The skilled person would appreciate that other fixing methods are possible, such as by crimping the bead onto the fibre unit using pliers, or screwing the bead on.

As explained above, the lens arrangement is configured to simultaneously enlarge or magnify the core of reflective end face (11) of the exposed fibre tip, and to focus the light beam (whether originating from ambient light outside the bead, or in the form of reflected light) back to the fibre unit. In a preferred embodiment, a gradient index (GRIN) lens (30) may be used, as being particularly suited for this purpose. GRIN lenses generally take the form of a cylindrical block of silica glass having a graded index profile in cross section having a varying refractive index. They are commonly-available off the shelf components, are mature technology and cheap, and familiar to operators and engineers as they are currently use in optical fibre connectors, to enable optical signals to be relayed down two connectorised fibres.

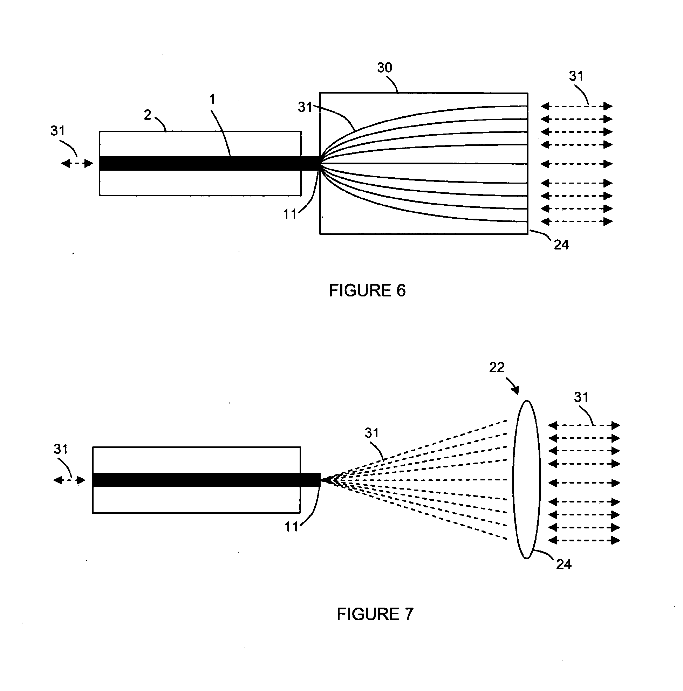

As illustrated in the enlarged view of the fibre tip (11) coupled to the lens (30) shown in Figure 6, light rays or beans (31) travel through the GRIN lens block (30) in both directions as indicated by the double-arrowed dotted lines. A point of light (31) from the cleaved end (11) diverges upon entry into a GRIN lens block, and emerges as parallel beams (31) at the other end. In the opposite direction, parallel beams entering the GRIN lens are focussed into e.g. a single point upon exit from the lens. In the embodiment using the GRIN lens, the capacity to simultaneously focus and diverge light advantageously allows for a point of light emerging from the fibre tip to be projected over the larger inner surface area (24) of the terminal end of the lens, as well as to transmit any light level changes experienced by the lens back into the fibre as a concentrated focussed point of light.

The reflective properties of the internal surfaces a GRIN lens has not previously been used for at least the present purpose. More usually, such internal reflections are thought to be an undesirable characteristic, particularly in their more usual employment in optical connectors wherein two lenses are aligned in a series to enable an optical signal to be propagated between e.g. a fibre to a parallel beam or vice versa, or from a semiconductor laser to a fibre. Such applications must expressly avoid internal surface reflections as they reduce coupling efficiency and in some instances can disturb the performance of the optical link. For this purpose, the input face (fibre side) and lens face of GRIN lenses used in such optical connectors are routinely coated to be highly anti-reflective.

In the invention, the GRIN lens has a reduced, or more preferably no anti-reflection coating particularly on its terminal face. This allows for the light within the fibre to be sufficiently reflected by the lens surface when the lens is exposed to air. This ensures a maximum change in detectable reflected light level when the lens embeds in the index matching gel.

While commercial GRIN lenses generally include an anti-reflection coating at their terminal ends, manufacturing GRIN lenses without the coating is a simple process as this requires merely the omission of a stage in the manufacture process. Without any need for low-reflectiveness, the GRIN lens need not be formed from high quality silica glass as is commonly the case. Instead, the lens may be made out of any material capable of projecting a diverged, enlarged version of the light emerging from the fibre end face towards the terminal end of the lens, and of converging most if not all the reflected light back into the fibre core. Such an optical material might be for instance, a clear plastic polymer which lends itself well to injection moulding.

Figure 7 depicts another embodiment of the invention, where the lens arrangement (22) is not directly coupled to the cleaved fibre end (11). Here, the bead includes a conventional convex lens, or a multiplex of convex and concave lenses. In use, light (31) diverges from the point at which it exits the cleaved face, disperses through the air before they enter the lens arrangement. The light exits the lens in parallel beams as shown by the dotted lines. In the opposite direction, the light entering the lens is focussed back into the fibre. In the embodiment shown, the lens arrangement comprises a convex lens, although other reflective planes with a suitable refractive index may be used for the purpose. Although it may be more difficult to ensure that the light beams travel accurately, or at least predictably, between the cleaved end and the lens, the skilled person would appreciate that it may be possible to compensate by use of an improved lens, a more intense light, or the inclusion of fluid or other optical material being inserted between the fibre and the lens.

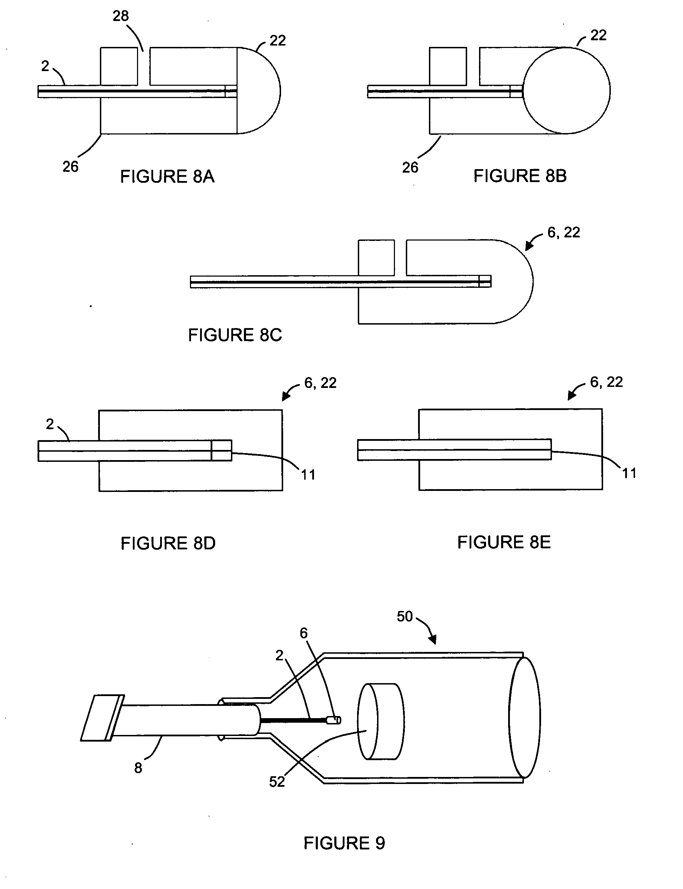

Figures 8A to 8E are examples of alternative bead designs according to the invention. It is possible to incorporate lenses of various shapes and geometries, as shown in Figures 8A and 8B which respectively show use of hemispherical and spherical lenses (22) incorporated into the main body (26) of the bead which can comprise an opaque material. Alternatively, it is possible to manufacture a lens to serve as the entire bead, as shown in Figure 8C. Such a wholly transparent bead may be appropriate in some applications, e.g. where the source of light level change will cause the change to envelope the bead upon arrival at the far end. Producing a bead from a single material may also simplify the production process. The lens-bead can be bullet-shaped as shown in Figures 8A to 8C, or as shown in Figure 8D and 8E, can take the form of a cylindrical block GRIN lens of the type (30) discussed above in connection with Figure 5. The embodiments shown in the figures show how the fibre unit tip area is stripped of its sheathing to expose the individual fibre in a preferred arrangement. However, the skilled person would appreciate that this is not necessary if the cleaved and exposed end face (11) of the fibre can be butt-coupled to the lens bead (6, 22) as shown in Figure 8E, in a sufficiently precise way to allow light to emanate from and be reflected back into the fibre.

Exemplary dimensions of a bead of the invention may accord with prior art beads, which have an outer diameter of 2 to 3mm and a length of around 5 to 6mm for small local network distribution fibre cables, containing up to 6 or 8 individual fibres. For larger cables containing more fibres the bead dimensions increase proportionally. Beads of the invention which include a discrete GRIN lens unit (e.g. that shown in Figure 8A), the outer diameter of the GRIN lens for a bead of the size described immediately above, might be typically 1 to 1.5mm, with a length of typically 2 to 3mm for small cables, and proportionally more for larger cables.

A bead of invention as described above addresses the need for a device which is sufficiently resilient and robust for use in the field in connection with a method such as that described in W02007/104910, i.e. detection of a drop in light intensity or level owing to the immersion of the bead and fibre tip in a light-dispersing gel or fluid, which indicates to an operator at the head end of the tube that the fibre has arrived.

Such a bead may also be usefully deployed to detect an increase in the ambient light level or intensity upon the leading end of the fibre reaching the destination far end, as described below.

### Fibre arrival detection - detection of reflection

Figure 7 depicts a component or device (50) which is arranged much like the device used in the detection technique is described in WO91/03756. In use, this is fitted over the tube (8) at the destination, far end of the installation. As the fibre unit (2) is blown through the tube, light is introduced into the fibre unit at the head end by a light source such as a semiconductor laser. The light can be continuous or arranged to be periodic (i.e. modulated) so as to be able to more easily distinguish it from any stray background light which may be present. When it is exposed to air, part of the light is transmitted onwards, while a portion of the light is mirrored back to the head end. The reflected light can be detected by a light detector such as an optical power meter or an optical time domain reflectometer.

In contrast with the device of WO91/03756 however, the reservoir of index-matching gel is replaced by a reflective surface (52) such as a mirror, which is arranged so that upon arrival at the far end of the installation, the light sensing surface (i.e. the cleaved end of the fibre or lens assembly) abuts the mirror. Preferably the sensing surface or component of the fibre or the bead is further held in position proximate to the reflective surface, upon such arrival, to maximise the intensity of the reflected light signal back into the fibre core. Even if the coupling angle between the sensing surface and the mirror is slightly less than completely perpendicular, the overall sensing methodology should in all but the most extreme cases be still workable with a good margin.

In order to improve the coupling strength however, in an alternative implementation the mirror is replaced with a retro-reflective device or surface (which has an angle of incidence which is greater than zero, unlike a mirror which has a zero angle of incidence). Such an element ensures that light is reflected back to the original source regardless of the relative angle between the light beam and the retro-reflective surface. A fibre tip or bead lens already containing light will thus be reflected and coupled back to the fibre core with a greater degree of tolerance than when the system is used with a planar mirror. Although in practice the typical level of reflectivity of a retro-reflective surface is less than that of a conventional reflective mirror, the improved coupling of even the lower level of reflected light allows for the system to work within a good margin. A sensing device (50) of this embodiment may also be manufactured more simply since exact and precise optical alignment between the fibre sensing surface and the retro-reflector component is not critical.

Prior to the fibre/lens on the end of the fibre coming close to the mirror the light path (33) shown in Figure 3 dominates while the reflected light levels (34) are significantly lower (close to zero) and light entering the fibre core (35) is also low, possibly lower yet (at zero), since there is no external light source yet proximate to the fibre tip or lens. When the fibre/lens on the end of the fibre comes close to the mirror, or even impacts perpendicularly, the level of the outwardly-transmitting light (33) continues to dominate. However, at this stage the level of light entering into the fibre (35) is significantly increased, while the level of reflected light (34) remains low.
The increased light introduced into the fibre core by the mirror propagates through the fibre and is eventually detected at the head end as a substantially and suddenly increased light signal at this point. This provides to the operator located at the head end, a positive indication that the fibre has arrived at its destination at the remote end of the conduit.

Advantageously, there is no need to employ a separate communication means to alert the operator when the fibre unit (2) has arrived at the remote end. The monitored fibre itself conveys that information to the operator at the head end. Expensive, delicate equipment, such as a radio transmitter that may have otherwise been required, need not be left unattended at the remote location. In response to confirmation that the advancing end of the fibre unit has arrived at the far end, the operator can manually turn off the blowing head and/or the air compressor to terminate the installation session. Alternatively, the termination process can be automated by the use of a processor to recognise a characteristic rise in the level of detected light, and automatically stop the blown fibre equipment. The processor can be incorporated into the light intensity detector, or the blowing head.

In the embodiment shown in Figure 9, the mirror (52) is annular, although it can be any shape to allow the advancing end of a fibre unit to couple with it so that the light emanating from it may be reflected back into the fibre. For example, it could be curved to include a dimple or other indentation or recess which the arriving bead or fibre tip could lodge into upon arrival. Other optional ways to secure the fibre tip or bead to the reflective surface may be included e.g. a gel with an appropriate refractive index to encourage adherence between the fibre tip or bead lens and the mirror, which does not dissipate the light from the fibre. The housing of the device (50) preferably comprises a cylinder of around 3 cm in diameter which may be formed by a low cost process such as plastic injection moulding. The total length of the housing is typically around 4 or 5 cm, depending on factors such as the outer diameter of the conduit or tube.

The skilled person would recognise that alternatives within the scope of the invention are possible - for example the step of introducing light into the fibre and monitoring the fibre for reflected light could be carried out only when the fibre unit stops moving (when for example the fibre unit stops moving, or when the operator otherwise believes that the fibre unit has arrived at the far end). The skilled person would also appreciate that other ways to increase the reflected light level at the far end are possible, e.g. by the inclusion of a light source within the device (50).

The device may be advantageously used with the bead described above: if a GRIN lens is employed, it is preferable to ensure that the lens has anti-reflection coating to minimise internal reflections at the surface of the lens's terminal end (24). However, it is not necessary to use the above-described bead, as any prior art beads may be used. Indeed, the method need not require use of any bead. If a bead of the type described above is used, its sensing end (24) is preferably coated or otherwise treated to reduce internal reflectivity when exposed to air, to encourage light to emanate from the fibre via the lens.

The methods, devices and configurations described above and in the drawings are for ease of description only and not meant to restrict the invention to any particular embodiments. It will be apparent to the skilled person that various sequences and permutations on the methods and devices described are possible within the scope of this invention as disclosed; similarly the invention could be used in various similar scenarios and for various cable types. In particular, while the bead and the sensing device may be advantageously used together in a preferred embodiment, they will work independently of each other on their own, to realise the advantages of the respective inventions.

## Claims

1. A method for use in connection with installing an optical fibre into a conduit having a first end and a second end,
the method being suitable to detect when the optical fibre introduced into the first end arrives at the second end, and comprising the steps of:
- introducing the optical fibre into the conduit from the first end and installing it towards the second end;
- introducing light with a light source into the optical fibre at the first end;
- detecting reflected light caused by reflection of the light by a surface of the optical fibre, with a light detector at the first end; and
- detecting an increase in the reflected light, whereby an operator may determine that the optical fibre has arrived at the second end.

2. A method according to claim 1 wherein the steps of introducing light and detecting reflect light are carried out while the optical fibre is being installed from the first end to the second end.

3. A device for use in connection with installing an optical fibre into a conduit having a first end and a second end, configured to couple with the conduit at the second end and being suitable to detect when the optical fibre introduced into the first end arrives at the second end, comprising reflecting means for reflecting a light emanating from the optical fibre into the device, so as to permit light detection means located at the first end to detect a change in reflected light levels in the optical fibre.

4. A device according to claim 3 arranged for use with apparatus comprising
- light detection means for detecting reflected light in the optical fibre; and
- means for detecting an increase in light levels in the optical fibre at the first end.

5. Apparatus according to claim 4 further including a light source for introducing light into the optical fibre from the first end.

6. A component for use for use in connection with installing an optical fibre into a conduit having a first end and a second end, and for use in conjunction with a device according to any one of claims 3 to 5, the component comprising means for coupling to a tip of the optical fibre and comprising
- a lens configured to permit passage of an emanating light emanating from the tip of the optical fibre to a surface of the lens,
- projection means to project a magnified version of the emanating light onto the surface, the surface being configured to permit at least part of the emanating light to be reflected as reflected light, and to permit passage of a part of the emanating light out of the lens, and
- converging means to positively focus the reflected light into the tip of the optical fibre.
